# EUROPÄISCHE PATENTSCHRIFT

(11) **EP 2 853 857 B1**
(45) Veröffentlichungstag und Bekanntmachung des Hinweises auf die Patenterteilung: **28.10.2015**
(21) Anmeldenummer: 14186340.7
(22) Anmeldetag: 25.09.2014
(51) Int. Cl.: G01B 21/32

(54) **Verfahren zur Messung der Aufweitung eines drehenden Rotors**
Method for measurement of the expansion of a rotating rotor
Procédé de mesure de l'élargissement d'un rotor rotatif

(30) Priorität: 26.09.2013 DE 102013110632
(43) Veröffentlichungstag der Anmeldung: 01.04.2015
(73) Patentinhaber: Schenck RoTec GmbH, 64293 Darmstadt (DE)
(72) Erfinder: Hartnagel, Matthias, 64683 Einhausen (DE); Dr. Trukenmüller, Kai, 64283 Darmstadt (DE)
(74) Vertreter: Haar, Lucas Heinz Jörn

(56) Entgegenhaltungen:
- EP-A2- 2 143 888
- DE-A1- 10 144 643
- GUNTHER P ET AL: "Measurement of radial expansion and tumbling motion of a high-speed rotor using an optical sensor system", MECHANICAL SYSTEMS AND SIGNAL PROCESSING, LONDON, GB, Bd. 25, Nr. 1, 1. Januar 2011 (2011-01-01) , Seiten 319-330, XP027510334, ISSN: 0888-3270, DOI: 10.1016/J.YMSSP.2010.08.005 [gefunden am 2010-08-27]

## Beschreibung

Die Erfindung betrifft ein Verfahren zur Messung der Aufweitung eines drehenden Rotors in Abhängigkeit von der Rotordrehzahl, bei dem in einem Grundabstand von der Rotoroberfläche ein erster Abstandssensor angeordnet wird, der berührungslos den Abstand der Rotoroberfläche von dem Abstandssensor erfasst.

Rotoren unterliegen bei Drehung einer Fliehkraftbelastung und werden durch diese aufgeweitet, d.h. der Durchmesser der Rotoren nimmt zu. Die Aufweitung steigt im einfachsten Fall quadratisch mit der Drehzahl an. Will man die Größe der Aufweitung, den ein Rotor bei seiner bestimmungsgemäßen Verwendung erfährt, genau kennen, um sie berücksichtigen zu können, so muss man die Aufweitung bei Drehung des Rotors messen. Bisher angewendete Verfahren zur Ermittlung der Aufweitung von Rotoren haben nur Ergebnisse bezüglich der Durchmesseränderung von Rotoren erbracht. In manchen Fällen interessiert aber auch die Aufweitung eines einzelnen Rotorsegments.

Aus Günther, P. u.a.: Measurement of radial expansion and tumbling motion of a high-speed rotor using an optical sensor system. Mechanical Systems and Signal Processing, Vol. 25 (2011), S. 319 bis 330 ist ein Verfahren zur Messung der radialen Expansion und Taumelbewegung eines mit hoher Geschwindigkeit drehenden Rotors mit Hilfe eines optischen Sensorsystems bekannt. Das Sensorsystem umfasst drei Laser-Doppler-Abstandssensoren, die in gleicher Höhe und in Winkelstellungen entlang des Umfangs des Rotors angeordnet sind und einen Abstand von dem Rotor und einen Winkelabstand von 120° voneinander haben. Zur Bestimmung der genauen Winkelausrichtung der drei Abstandssensoren ist hierbei an dem Rotor eine optische Marke angebracht, die Sensorsignale auslöst, wobei die Zeitverzögerung zwischen den ausgelösten Signalen der drei Sensoren in Bezug auf die Drehfrequenz zur Bestimmung des genauen Winkelabstands der Sensoren dient. Die elektrischen Ausgangssignale der Sensoren werden bei der Messung mit einer an die Rotordrehzahl angepassten Abtastrate abgetastet und in Abhängigkeit von der Drehfrequenz so eingestellt, dass bei einer Rotorumdrehung eine bestimmte Anzahl von Messpunkten erreicht wird. Für jeden Abtastschritt wird dann durch Lösung eines linearen Gleichungssystems das Massenzentrum und die radiale Ausdehnung berechnet und schließlich ein Durchschnittswert der radialen Ausdehnung für ein als zylindrisches Messobjekt angenommenen Rotor aus einer größeren Zahl von aufeinander folgenden Messpunkten berechnet. Eine drehwinkelbezogene Bestimmung der Rotoraufweitung erfolgt hierbei nicht.

In DE 101 44 643 A1 ist ein Messsystem mit mehreren, mit einem Stator eines Rotor-Stator-Systems verbundenen und an einem Rotor angeordneten, berührungslos messenden Abstandssensoren beschrieben, bei welchem zur Erfassung eines radialen Abstands zwischen dem Stator und dem Rotor zwei Paare einander diametral gegenüberliegender Abstandssensoren angeordnet sind. Zur Ermittlung einer Verlagerung des Rotors werden die Messsignale der Abstandssensoren eines Paares mit umgekehrten Vorzeichen addiert. Zur Bestimmung einer radialen Aufweitung des Rotors werden die Messsignale aller vier Abstandssensoren mit positivem Vorzeichen aufsummiert. Mittel zur drehwinkelbezogenen Erfassung einer Rotoraufweitung sind nicht vorgesehen.

Der Erfindung liegt daher die Aufgabe zugrunde, ein Verfahren zur Messung der Aufweitung eines drehenden Rotors in Abhängigkeit von der Rotordrehzahl anzugeben, welches eine von einer Verlagerung des Rotormittelpunkts nicht beeinflusste Aussage über die Aufweitung von einzelnen Rotorsegmenten unter Fliehkraftbelastung ermöglicht.

Die genannte Aufgabe wird durch ein Verfahren mit den in den Ansprüchen 1 oder 2 angegebenen Merkmalen gelöst. Vorteilhafte Weiterbildungen des Verfahrens sind in den Ansprüchen 3 bis 5 angegeben.

Bei dem Verfahren nach der Erfindung wird in einem Grundabstand von der Rotoroberfläche ein erster Abstandssensor angeordnet, der berührungslos den Abstand der Rotoroberfläche von dem Abstandssensor zeitbezogen erfasst und zeitbezogene elektrische erste Abstandssignale erzeugt. Weiterhin wird dem Rotor ein Nullmarkensensor zugeordnet, der eine an dem Rotor angebrachte Nullmarke zeitbezogen abtastet und zeitbezogene elektrische Nullmarkensignale erzeugt. Die zeitbezogenen ersten Abstandssignale und die zeitbezogenen Nullmarkensignale werden einer elektrischen Auswerteeinrichtung zugeführt und von dieser verarbeitet, indem aus den Nullmarkensignalen eine Drehzahl und ein jedem Zeitpunkt einer Rotordrehung zugeordneter Drehwinkel errechnet wird und jeder einem Zeitpunkt zugeordneter Drehwinkel mit dem zeitgleichen Abstandssignal zu einem drehwinkelbezogenen Abstandssignal verbunden wird und daraus eine von dem Drehwinkel und der Drehzahl abhängige Aufweitung des Rotors berechnet wird.

Der Drehwinkelbezug der Abstandssignale ermöglicht die Ermittlung der durch Fliehkräfte hervorgerufenen, von der Drehzahl abhängige Aufweitung eines Rotors für jeden durch einen auf einen Nullpunkt bezogenen Drehwinkel bestimmten Punkt der von der Messung erfassten Spur der Rotoroberfläche.

Bei der Rotation eines Rotors können jedoch Rotorschwingungen entstehen, die dem von dem Abstandssensor erzeugten Abstandssignal überlagert sind. Dies können Schwingungen erster Ordnung sein, die durch Unwucht oder Schlag verursacht sind. Ferner können durch Einflüsse der Rotorlagerung, beispielsweise durch Gleitlager, Schwingungen auftreten, deren Frequenz kleiner oder größer als der von Schwingungen erster Ordnung ist. Außerdem kann sich der Mittelpunkt des Rotors, um den der Rotor schwingt, bei verschiedenen Drehzahlen verlagern. Der Rotor ist in üblicher Weise mit vertikaler Drehachse in einem Gleitlager gelagert und kann sich daher seitlich bewegen und bei verschiedenen Drehzahlen verschiedene stabile Punkte einnehmen. Die genannten Einflüsse und insbesondere die drehzahlabhängige Verlagerung der Rotorachse sind dem gemessenen Abstandssignal überlagert und beeinflussen dadurch die Genauigkeit des Messergebnisses.

Um den Störeinfluss einer Verlagerung des Rotormittelpunkts zu beseitigen, ist nach einem Vorschlag der Erfindung auf der dem ersten Abstandssensor abgekehrten Seite des Rotors diametral zum ersten Abstandssensor ein zweiter Abstandssensor in einem Grundabstand vom Rotor angeordnet, der berührungslos den Abstand der Rotoroberfläche von dem zweiten Abstandssensor zeitbezogen erfasst und zeitbezogene elektrische zweite Abstandssignale erzeugt, die der elektrischen Auswerteeinrichtung zugeführt und von dieser verarbeitet werden.

Werden die ersten und zweiten Abstandssignale der gegenüber liegenden Abstandssensoren addiert, so werden damit alle störenden Rotorschwingungen und Verlagerungen beseitigt, da die Bewegungen, die der Rotor in Richtung auf einen der beiden Abstandssensoren macht, ihn in gleichem Maße von dem anderen Abstandssensor entfernen. Die einfache Addition der Abstandssignale beider Abstandssensoren hat aber den Nachteil, dass dann eine Aussage über die Aufweitung des Rotors jeweils nur noch auf den Durchmesser bezogen werden kann, da aus der Summe des ersten und zweiten Abstandssignals nicht ermittelt werden kann, welcher Anteil der Aufweitung z.B. vom Drehwinkel 0° und welcher Anteil vom Drehwinkel 180° kommt. Von Vorteil ist hierbei jedoch, dass alle von der Messung erfassten Rotorschwingungen, auch die einer Frequenz größer als der Frequenz erster Ordnung, eliminiert werden. Örtliche Änderungen der Oberfläche des Rotors werden nicht eliminiert, sondern mit der gegenüber liegenden Oberfläche addiert angegeben.

Um eine von der Verlagerung des Rotormittelpunkts freie Aussage über die auf Rotorsegmente bezogene Aufweitung zu erhalten, wird nach einem bevorzugten ersten Vorschlag der Erfindung ein zu einem ersten Zeitpunkt T₀, der einem Drehwinkel des Rotors von 0° entspricht, erfasstes erstes Abstandssignal des ersten Abstandssensors mit nach einer halben Drehung des Rotors zu einem Zeitpunkt T₁₈₀ erfassten zweiten Abstandssignal des ersten Abstandssensors zu einer ersten Signalsumme addiert und ein zu dem ersten Zeitpunkt T₀ erfasstes erstes Abstandssignal des zweiten Abstandssensors wird mit einem zum Zeitpunkt T₁₈₀ erfassten zweiten Abstandssignalen des zweiten Abstandssensors z einer zweiten Signalsumme addiert, dann wird die zweite Signalsumme von der ersten Signalsumme subtrahiert und durch Teilen des bei der Subtraktion erhaltene Differenzsignals mit dem Divisor 4 ein Signalkorrekturwert gebildet.

In dem auf diese Weise gewonnenen Signalkorrekturwert sind die Einflüsse der Schwingungen erster Ordnung eliminiert, Schwingungen einer Frequenz kleiner als Schwingungen erster Ordnung können durch Mittelwertbildung bereits im Vorhinein eliminiert werden. Ebenso kann die in der Signalsumme doppelt vorhandene Differenz der Sensorgrundabstände durch in Bezug setzen zu einer den Grundabstand bestimmenden Referenzmessung eliminiert werden.

Der gewonnene Signalkorrekturwert entspricht der Verlagerung der Drehachse des Rotors bei der Messdrehzahl und kann von den bei der gleichen Messung ermittelten drehwinkelbezogenen Abstandssignalen eines Abstandssensors subtrahiert werden. Störschwingungen erster Ordnung, die in den Abstandssignalen enthalten sind, werden durch anschließende Filterung beseitigt. Damit ist eine drehwinkelbezogene Aussage über die Aufweitung des Rotors mit den Abstandssignalen nur eines Abstandssensors möglich. Die Abstandssignale des anderen Sensors werden nur für die Bestimmung der Verlagerung der Rotorachse und des diese beschreibenden Signalkorrekturwerts benötigt.

Nach einem anderen Vorschlag der Erfindung kann an einer in axialer Richtung des Rotors von dem ersten Abstandssensor entfernten Stelle des Rotors, von der die Aufweitung und Form der Rotoroberfläche bekannt sind, ein zweiter Abstandssensor in einem Grundabstand von dem Rotor angeordnet werden, der berührungslos den Abstand der Rotoroberfläche von dem zweiten Abstandssensor zeitbezogen erfasst und zeitbezogene elektrische zweite Abstandssignale erzeugt, die der elektrischen Auswerteeinrichtung zugeführt und von dieser zur Korrektur der von dem ersten Abstandssensor erfassten ersten Abstandssignale verarbeitet werden, indem nach Abzug der bekannten Aufweitung und Form der Rotoroberfläche von dem zweiten Abstandssignal die darin verbliebenen Störschwingungen von dem ersten Abstandssignal des ersten Abstandssensors entfernt werden. Wesentlich ist bei diesem Verfahren, dass die Rotorschwingungen an den beiden Abstandssensoren sich nicht unterscheiden.

Schwingungen mit einer Frequenz, die kleiner ist als eine Frequenz erster Ordnung, können nach der Erfindung durch eine Messung der Abstandssignale über mehrere Umdrehungen des Rotors und anschließende Bildung eines Mittelwerts eliminiert werden. Es ist vorteilhaft, diesen Teil der Signalverarbeitung vor der Berechnung des Korrekturwerts durchzuführen. Störende Schwingungen erster Ordnung werden aus den Abstandssignalen heraus gefiltert.

Die Erfindung wird nachfolgend anhand eines Ausführungsbeispiels näher erläutert, das in der Zeichnung dargestellt ist. Es zeigen
- Figur 1: eine schematische Darstellung einer Vorrichtung zur Messung der Aufweitung eines drehenden Rotors und
- Figur 2: eine schematische Darstellung der Messanordnung.

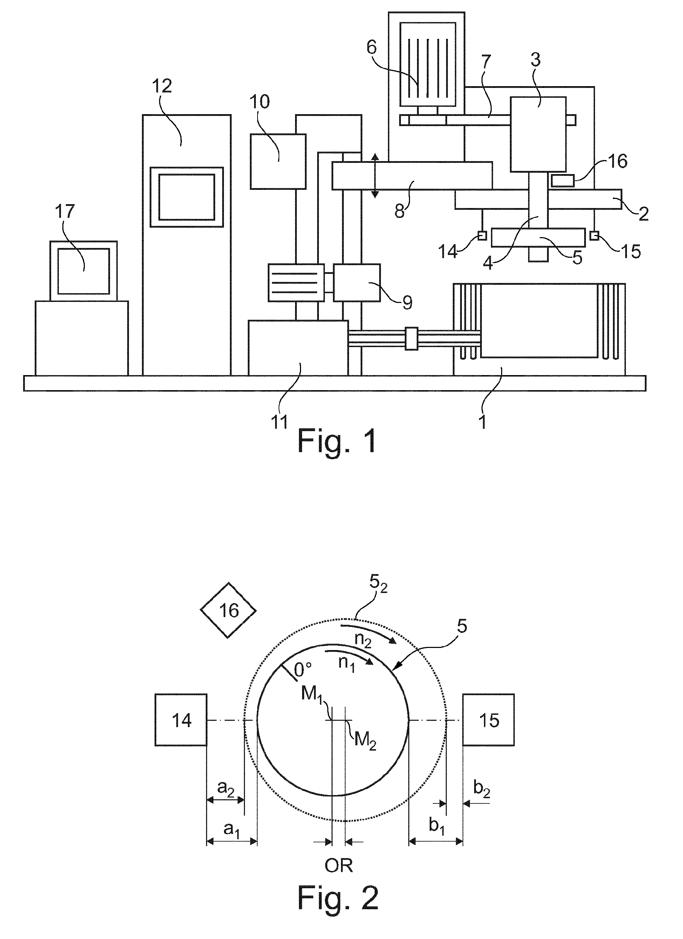

Figur 1 zeigt eine zum hochtourigen Schleudern und zum Messen der Aufweitung von drehenden Rotoren geeignete Vorrichtung. Die Vorrichtung umfasst einen zylindrischen Schutzbehälter 1, der den drehenden Rotor bei einem Messlauf aufnimmt und umgibt. Der Schutzbehälter 1 ist mit einem Deckel 2 verschließbar, auf dessen außerhalb des Schutzbehälters 1 liegender Oberseite ein Getriebe 3 mit einer Welle 4 angeordnet ist. Die Welle 4 ist durch den Deckel 2 hindurchgeführt und weist auf der Unterseite des Deckels 2 einen Flansch zur Befestigung eines zu messenden Rotors 5 auf. Der Antrieb der Welle 4 erfolgt durch einen Elektromotor 6, der über einen Riementrieb 7 mit dem Getriebe 3 verbunden ist. Der Deckel 2 ist an einem Arm 8 einer hydraulischen Hubeinheit 9 angebracht, durch welche der Deckel 2 von dem Schutzbehälter 1 abgehoben und auf ihn aufgesetzt werden kann. In einem Gehäuse 10, das an dem Gestell der Hubeinheit 9 angeordnet ist, ist die hydraulische Steuerung der Hubeinheit 9 untergebracht. Der geschlossene Schutzbehälter 1 kann mittels einer Vakuumpumpe 11 evakuiert werden, um Antriebsverluste und zu starke Erwärmung des Behälterinnenraums zu vermeiden. Zur Steuerung des Elektromotors 6, der Hubeinheit 9 und Vakuumpumpe 11 dient eine elektrische Steuereinheit 12.

Für die Messung der Aufweitung des Rotors 5 sind an dem Deckel 2 diametral gegenüber liegend zwei berührungslos messende Abstandssensoren 14, 15 in geringem Abstand zur Rotoroberfläche angebracht. Weiterhin ist an dem Deckel 2 neben einem freiliegenden Abschnitt der Welle 4 ein Nullpunktsensor 16 angeordnet, der eine Nullmarke auf der Welle 4 abtastet. Die Abtastung der Nullmarke ist auch für den Rotor 5 zutreffend, da der Rotor 5 mit Hilfe des Flansches fest mit der Welle 4 verbunden ist. Die Abstandssensoren 14, 15 und der Nullpunktsensor 16 sind durch nicht dargestellte Leitungen an eine Auswerteeinrichtung 17 angeschlossen, die einen mit einem Auswertungsprogramm programmierten Computer einschließt. Die Abstandssensoren 14, 15 erzeugen vom Abstand der Rotoroberfläche abhängige analoge Spannungen, die im Eingang der Auswerteeinrichtung 17 in digitale Abstandssignale umgewandelt werden. Auch das Spannungssignal des Nullpunktsensors wird digitalisiert.

Zur Messung der Aufweitung des Rotors 5 wird der Deckel 2 durch die Hubeinheit 9 auf den Schutzbehälter 1 aufgesetzt. Der Rotor 5 und die an seinem Umfang angeordneten Abstandssensoren 14, 15 gelangen damit in den Innenraum des Schutzbehälters 1, so dass nun, durch die Steuereinheit 12 gesteuert, Messläufe durchgeführt werden können. Bei den Messläufen wird der Rotor 5 durch den Elektromotor 6 über das Getriebe 3 und die Welle 4 angetrieben und mit verschiedenen Drehzahlen gedreht.

Zu Beginn einer Messung werden bei niedrigen Drehzahlen mehrere Referenzläufe durchgeführt, die dazu dienen, den Grundabstand der beiden Abstandssensoren 14, 15 zu bestimmen. Zur Messung der Aufweitung wird dann der Rotor 5 auf eine sehr viel höhere Drehzahl beschleunigt und bei konstanter Drehzahl werden die Abstandssignale der beiden Abstandssensoren 14, 15 und das Nullmarkensignal des Nullmarkensensors 16 zeitgleich erfasst und der Auswerteeinrichtung 17 zugeführt und von dieser zeitbezogen verarbeitet. Die Auswerteeinrichtung 17 berechnet mit Hilfe der Nullmarkensignale den Drehwinkelbezug der Abstandssignale und führt eine Mittelwertbildung aus den über mehrere Rotorumdrehungen gemessenen Abstandssignalen durch. Durch diese Mittelwertbildung werden Schwingungen mit einer Frequenz kleiner der Frequenz erster Ordnung eliminiert.

Die Auswerteeinrichtung 17 verfügt nun über winkelbezogene, gemittelte Abstandssignale von jedem der beiden Abstandssensoren 14, 15. Die Abstandssignale jedes Abstandssensors 14 bzw. 15 enthalten den gemessenen, drehwinkelbezogenen, von der Aufweitung des Rotors 5 abhängigen Abstand, der drehzahlabhängig und auch drehwinkelabhängig ist, aber mit jeder Rotordrehung bei konstanter Drehzahl wiederholbar ist. Die Abstandssignale enthalten außerdem den drehzahlunabhängigen Grundabstand.

Die Abstandssignale können darüber hinaus die Messung beeinträchtigende Störanteile enthalten, die durch Rotorschwingungen hervorgerufen sind, die bei der Drehung des Rotors entstehen können. Weiterhin kann sich der Mittelpunkt des Rotors, um den die Schwingbewegungen stattfinden, bei verschiedenen Drehzahlen verschieden verlagern. Auch die Drehachse der in einem Gleitlager gelagerten Welle 4, an der der Rotor 5 befestigt ist, kann bei verschiedenen Drehzahlen verschieden verlagerte stabile Positionen einnehmen. Durch die im Folgenden beschriebene Verarbeitung der winkelbezogenen gemittelten Abstandssignale von zwei gegenüber liegend angeordneten Abstandssensoren 14, 15 können störende Schwingungen erster Ordnung und eine das Messergebnis beeinflussende Verlagerung des Rotormittelpunkts eliminiert werden.

Figur 2 veranschaulicht die Messsituation. Die durchgezogene Linie veranschaulicht die Oberfläche des Rotors 5 bei einer Drehzahl n₁, bei der der Rotor 5 um den Mittelpunkt M₁ dreht. Bei der Drehzahl n₁ misst der Abstandssensor 14 einen Abstand a₁ und der Abstandssensor 15 einen Abstand b₁. Bei Veränderung der Drehzahl von n₁ zu n₂ wandert der Mittelpunkt des Rotors 5 zu einem anderen stabilen Punkt M₂ und der Rotor 5 erfährt eine Aufweitung entsprechend der punktierten Linie 5₂. Der Abstandssensor 14 misst einen Abstand a₂ und der Abstandssensor 15 einen Abstand b₂.

Für die Messung ist nur der Anteil einer Rotorverlagerung relevant, der in der Verbindungsachse der beiden Abstandssensoren 14, 15 liegt. OR bezeichnet die relevante Strecke der Rotorverlagerung. Der Rotor bewegt sich also um die Strecke OR auf den Abstandssensor 15 zu und entfernt sich um dieselbe Strecke von dem Abstandssensor 14.

Eine Subtraktion beider bei Drehzahl n₂ gemessenen Signale a₂ minus b₂ wird also die doppelte Strecke 2x OR ergeben. Dies würde aber nicht zu einem brauchbaren Ergebnis führen. Der Abstandssensor 14 erfasst die Aufweitung des Rotors an der Rotorposition 0°, der Abstandssensor 15 erfasst die Aufweitung an der Rotorposition 180°. Diese beiden Aufweitungswerte können sich prinzipiell unterscheiden. Die Subtraktion würde nur die Differenz übrig lassen.

Aus diesem Grund wird nach der Erfindung zunächst das Abstandssignal des Abstandssensors 14 zum Zeitpunkt T₀ mit dem Abstandssignal des Abstandssensors 14 zum Zeitpunkt T₁₈₀ addiert, bei dem der Rotor um eine halbe Umdrehung weiter gedreht ist. Durch die Addition enthält die Signalsumme die vom Abstandssensor 14 gemessene Aufweitung an der Stelle 0° und an der Stelle 180°. Die Verlagerung OR der Rotationsachse ist durch die Addition in der Signalsumme doppelt enthalten. Gleiches gilt für den Grundabstand des Sensors, der ebenfalls doppelt enthalten ist. Schwingungen erster Ordnung werden durch die Addition vorteilhaft eliminiert.

Die gleiche Rechnung wird mit den Abstandssignalen zu den Zeitpunkten T₀ und T₁₈₀ des Abstandssensors 15 gemacht. Die Signalsumme enthält hier prinzipiell die gleichen Signalanteile. Unterschiedlich sind jedoch die Verlagerung OR der Rotationsachse, die hier mit umgekehrtem Vorzeichen aber ebenfalls doppelt vorhanden ist. Außerdem hat der Abstandssensor 15 einen anderen Grundabstand, der in der Signalsumme nun doppelt vorhanden ist.

Die Signalsummen der Abstandssignale von beiden Abstandssensoren 14 und 15 werden nun voneinander subtrahiert. Hierdurch wird die winkelbezogene Rotoraufweitung eliminiert. Die Verlagerung OR der Rotationsachse ist in dem Differenzwert jedoch vierfach vorhanden. Außerdem ist in dem Differenzwert die Differenz der Sensorgrundabstände doppelt vorhanden. Letztere ist jedoch nicht drehzahlabhängig und kann später durch Bezugnahme auf die ermittelten Referenzwerte der Sensorgrundabstände eliminiert werden.

Das Ergebnis dieser Berechnung wird anschließend durch den Divisor 4 geteilt. Man erhält dann einen drehzahlabhängigen Korrekturwert für die Verlagerung OR des Rotors bei der Messdrehzahl n₂ und kann diesen Wert von allen drehwinkelbezogenen Messsignalen eines Abstandssensors, die mit dieser Drehzahl ermittelt wurden, abziehen. In den Messsignalen des Abstandssensors noch enthaltene Schwingungen erster Ordnung werden anschließend durch Filterung entfernt.

Das erfindungsgemäße Verfahren ermöglicht damit eine drehwinkelbezogene Aussage über die Aufweitung eines Rotors mit den von nur einem Abstandssensor gemessenen Abstandssignalen. Der zweite Abstandssensor wird nur für die Bestimmung der Verlagerung OR der Rotationsachse und die Berechnung des Korrekturwerts verwendet. Im berechneten, winkelbezogenen Abstandssignal verbleiben nur Rotorschwingungen von einer Frequenz größer der Frequenz erster Ordnung, die nicht von der Rotoroberfläche oder der Aufweitung des Rotors resultieren. Man muss deshalb dafür sorgen, dass diese Schwingungen nicht auftreten oder nur so schwach auftreten, dass sie vernachlässigt werden können.

## Patentansprüche

1. Verfahren zur Messung der Aufweitung eines drehenden Rotors (5) in Abhängigkeit von der Rotordrehzahl, bei dem in einem Grundabstand von der Rotoroberfläche ein erster Abstandssensor (14) angeordnet wird, der berührungslos den Abstand der Rotoroberfläche von dem ersten Abstandssensor (14) zeitbezogen erfasst und zeitbezogene elektrische erste Abstandssignale erzeugt, dem Rotor (5) ein Nullmarkensensor (16) zugeordnet wird, der eine an dem Rotor (5) angebrachte Nullmarke zeitbezogen abtastet und zeitbezogene elektrische Nullmarkensignale erzeugt, wobei die zeitbezogenen ersten Abstandssignale und die zeitbezogenen Nullmarkensignale einer elektrischen Auswerteeinrichtung (17) zugeführt und von dieser verarbeitet werden, indem aus den Nullmarkensignalen eine Drehzahl und ein jedem Zeitpunkt einer Rotordrehung zugeordneter Drehwinkel errechnet und jeder einem Zeitpunkt zugeordneter Drehwinkel mit dem zeitgleichen Abstandssignal zu einem drehwinkelbezogenen Abstandssignal verbunden wird und daraus eine von dem Drehwinkel und der Drehzahl abhängige Aufweitung des Rotors (5) berechnet wird, wobei auf der dem ersten Abstandssensor (14) abgekehrten Seite des Rotors (5) diametral zum ersten Abstandssensor (14) ein zweiter Abstandssensor (15) in einem Grundabstand von dem Rotor (5) angeordnet wird, der berührungslos den Abstand der Rotoroberfläche von dem zweiten Abstandssensor (15) zeitbezogen erfasst und zeitbezogene elektrische zweite Abstandssignale erzeugt, die der elektrischen Auswerteeinrichtung (17) zugeführt und von dieser verarbeitet werden und wobei zu einem ersten Zeitpunkt T₀, der einem Drehwinkel des Rotors (5) von 0° entspricht, erfasste erste Abstandssignale des ersten Abstandssensors (14) mit nach einer halben Drehung des Rotors zu einem Zeitpunkt T₁₈₀ erfassten zweiten Abstandssignalen des ersten Abstandssensors (14) zu einer ersten Signalsumme addiert werden und zu dem ersten Zeitpunkt T₀ erfasste erste Abstandssignale des zweiten Abstandssensors (15) mit zu dem Zeitpunkt T₁₈₀ erfassten zweiten Abstandssignalen des zweiten Abstandssensors (15) zu einer zweiten Signalsumme addiert werden, die zweite Signalsumme von der ersten Signalsumme subtrahiert wird und durch Teilen des erhaltene Differenzsignals mit dem Divisor 4 ein Signalkorrekturwert gebildet und von den bei der gleichen Messung ermittelten drehwinkelbezogenen Abstandssignalen eines Abstandssensores (14 bzw. 15) subtrahiert wird.

2. Verfahren zur Messung der Aufweitung eines drehenden Rotors (5) in Abhängigkeit von der Rotordrehzahl, bei dem in einem Grundabstand von der Rotoroberfläche ein erster Abstandssensor (14) angeordnet wird, der berührungslos den Abstand der Rotoroberfläche von dem ersten Abstandssensor (14) zeitbezogen erfasst und zeitbezogene elektrische erste Abstandssignale erzeugt, dem Rotor (5) ein Nullmarkensensor (16) zugeordnet wird, der eine an dem Rotor (5) angebrachte Nullmarke zeitbezogen abtastet und zeitbezogene elektrische Nullmarkensignale erzeugt, wobei die zeitbezogenen ersten Abstandssignale und die zeitbezogenen Nullmarkensignale einer elektrischen Auswerteeinrichtung (17) zugeführt und von dieser verarbeitet werden, indem aus den Nullmarkensignalen eine Drehzahl und ein jedem Zeitpunkt einer Rotordrehung zugeordneter Drehwinkel errechnet und jeder einem Zeitpunkt zugeordneter Drehwinkel mit dem zeitgleichen Abstandssignal zu einem drehwinkelbezogenen Abstandssignal verbunden wird und daraus eine von dem Drehwinkel und der Drehzahl abhängige Aufweitung des Rotors (5) berechnet wird, wobei an einer in axialer Richtung des Rotors (5) vom ersten Abstandssensor (14) entfernten Stelle des Rotors (5), von der Aufweitung und Rotoroberfläche bekannt sind, ein zweiter Abstandssensor in einem Grundabstand von dem Rotor (5) angeordnet wird, der berührungslos den Abstand der Rotoroberfläche von dem zweiten Abstandssensor zeitbezogen erfasst und zeitbezogene elektrische zweite Abstandssignale erzeugt, die der elektrischen Auswerteeinrichtung zugeführt und von dieser zur Korrektur der von dem ersten Abstandssensor (14) erfassten ersten Abstandssignalen verarbeitet werden, indem nach Abzug der bekannten Aufweitung und Form der Rotoroberfläche von dem zweiten Abstandssignal die darin verbliebenen Störschwingungen von dem ersten Abstandssignal des ersten Abstandssensors entfernt werden.

3. Verfahren nach einem der vorhergehenden Ansprüche, **dadurch gekennzeichnet, dass** Schwingungen mit einer Frequenz, die kleiner ist als eine Frequenz erster Ordnung, durch eine Messung der Abstandssignale über mehrere Umdrehungen des Rotors und anschließende Bildung eines Mittelwerts eliminiert werden.

4. Verfahren nach einem der vorhergehenden Ansprüche, **dadurch gekennzeichnet, dass** zur Bestimmung des Grundabstands der Abstandssensoren ein Mittelwert aus mehreren Referenzläufen bei niedriger Drehzahl gebildet wird.

5. Verfahren nach einem der vorhergehenden Ansprüche, **dadurch gekennzeichnet, dass** störende Schwingungen erster Ordnung durch Filterung aus den Abstandssignalen eliminiert werden.

## Claims

1. A method of measuring the expansion of a rotating rotor (5) in dependence upon the rotor speed, in which at a basic distance from the rotor surface a first distance sensor (14) is arranged which senses in non-contacting fashion the distance between the rotor surface and the first distance sensor (14) with respect to time and produces time-related electrical first distance signals, a zero-mark sensor (16) is assigned to the rotor (5) which senses a zero mark provided on the rotor (5) with respect to time and produces time-related electrical zero-mark signals, wherein the time-related first distance signals and the time-related zero-mark signals are fed to an electrical evaluating device (17) for processing, which includes computing from the zero-mark signals a rotational speed and an angle of rotation assigned to each instant of time of a rotor revolution, and connecting each angle of rotation assigned to an instant of time to the isochronous distance signal to form a rotational-angle-related distance signal and computing therefrom an expansion of the rotor (5) in response to the angle of rotation and the rotational speed, wherein on the side of the rotor (5) facing away from the first distance sensor (14) a second distance sensor (15) is arranged diametrically opposite the first distance sensor (14) at a basic distance from the rotor (5), which senses in non-contacting fashion the distance between the rotor surface and the second distance sensor (15) with respect to time and produces time-related electrical second distance signals which are fed to the electrical evaluating device (17) for processing, and wherein at a first instant of time T₀, which corresponds to an angle of rotation of 0° of the rotor (5), first distance signals sensed by the first distance sensor (14) are added to second distance signals of the first distance sensor (14) sensed after one half revolution of the rotor at an instant of time T₁₈₀ to obtain a first signal sum, and first distance signals sensed by the second distance sensor (15) at the first instant of time T₀ are added to second distance signals of the second distance sensor (15) sensed at the instant of time T₁₈₀ to obtain a second signal sum, said second signal sum is subtracted from said first signal sum and a signal correction value is formed by dividing, by divisor 4, the differential signal obtained and subtracting it from the rotational-angle-related distance signals of a distance sensor (14 and 15, respectively) determined in the same measurement.

2. A method of measuring the expansion of a rotating rotor (5) in dependence upon the rotor speed, in which at a basic distance from the rotor surface a first distance sensor (14) is arranged which senses in non-contacting fashion the distance between the rotor surface and the first distance sensor (14) with respect to time and produces time-related electrical first distance signals, a zero-mark sensor (16) is assigned to the rotor (5) which senses a zero mark provided on the rotor (5) with respect to time and produces time-related electrical zero-mark signals, wherein the time-related first distance signals and the time-related zero-mark signals are fed to an electrical evaluating device (17) for processing, which includes computing from the zero-mark signals a rotational speed and an angle of rotation assigned to each instant of time of a rotor revolution, and connecting each angle of rotation assigned to an instant of time to the isochronous distance signal to form a rotational-angle-related distance signal and computing therefrom an expansion of the rotor (5) in response to the angle of rotation and the rotational speed, wherein at a location on the rotor (5) remote from the first distance sensor (14) in an axial direction of the rotor (5), of which location expansion and rotor surface are known, a second distance sensor is arranged at a basic distance from the rotor (5) which senses in non-contacting fashion the distance between the rotor surface and the second distance sensor with respect to time and produces time-related electrical second distance signals which are fed to the electrical evaluating device which processes them for correction of the first distance signals sensed by the first distance sensor (14) by subtracting the known expansion and shape of the rotor surface from the second distance signal and subsequently removing the remaining parasitic oscillations from the first distance signal of the first distance sensor.

3. The method according to any one of the preceding claims, **characterized by** eliminating oscillations of a frequency lower than a first-order frequency by measuring the distance signals over several revolutions of the rotor and subsequently forming an average value.

4. The method according to any one of the preceding claims, **characterized by** forming a mean value from several reference runs at low speed for determining the basic distance of the distance sensors.

5. The method according to any one of the preceding claims, **characterized by** eliminating first-order parasitic oscillations by filtering them from the distance signals.

## Revendications

1. Procédé de mesure de l'élargissement d'un rotor rotatif (5) en fonction de la vitesse de rotation de ce rotor, dans lequel un premier capteur de distance (14) est disposé à une distance de base de la surface du rotor, lequel capteur détecte dans le temps et sans contact la distance entre la surface du rotor et le premier capteur de distance (14) et génère des premiers signaux de distance électriques rapportés au temps, un capteur de repère d'origine (16) est affecté au rotor (5), lequel capteur balaye dans le temps un repère d'origine placé sur le rotor (5) et génère des signaux électriques de repère d'origine rapportés au temps, les premiers signaux de distance rapportés au temps et les signaux de repère d'origine rapportés au temps étant acheminés à un dispositif d'analyse électrique (17) et traités par celui-ci en calculant, à partir des signaux de repère d'origine, une vitesse de rotation et un angle de rotation attribué à chaque instant d'une rotation du rotor, et en reliant chaque angle de rotation, attribué à un instant, avec le signal de distance isochrone à un signal de distance rapporté à l'angle de rotation, et en calculant à partir de là un élargissement du rotor (5) qui dépend de l'angle de rotation et de la vitesse de rotation, un deuxième capteur de distance (15) étant disposé à une distance de base du rotor (5) sur le côté du rotor (5) opposé au premier capteur de distance (14) diamétralement au premier capteur de distance (14), lequel deuxième capteur de distance détecte dans le temps et sans contact la distance entre la surface du rotor et le deuxième capteur de distance (15) et génère des deuxièmes signaux de distance électriques rapportés au temps lesquels sont acheminés à l'unité d'analyse électrique (17) et traités par celle-ci, et à un premier instant T₀, qui correspond à un angle de rotation du rotor (5) de 0°, des premiers signaux de distance détectés par le premier capteur de distance (14) étant additionnés à des deuxièmes signaux de distance détectés par le premier capteur de distance (14) après une demi-rotation du rotor à un instant T₁₈₀ pour former une première somme de signaux et des premiers signaux de distance détectés par le deuxième capteur de distance (15) au premier instant T₀ étant additionnés à des deuxièmes signaux de distance détectés par le deuxième capteur de distance (15) à l'instant T₁₈₀ pour former une deuxième somme de signaux, la deuxième somme de signaux étant soustraite de la première somme de signaux et une valeur de correction des signaux étant formée en divisant le signal différentiel obtenu par 4 et soustraite des signaux de distance d'un capteur de distance (14 ou 15) rapporté à l'angle de rotation déterminé lors de la même mesure.

2. Procédé de mesure de l'élargissement d'un rotor rotatif (5) en fonction de la vitesse de rotation du rotor, dans lequel un premier capteur de distance (14) est disposé à une distance de base de la surface du rotor, lequel capteur détecte dans le temps et sans contact la distance entre la surface du rotor et le premier capteur de distance (14), et génère des premiers signaux de distance électriques (14) rapportés au temps, un capteur de repère d'origine (16) est affecté au rotor (5), lequel capteur balaye dans le temps un repère d'origine placé sur le rotor (5) et génère des signaux électriques de repère d'origine rapportés au temps, les premiers signaux de distance électriques rapportés au temps et les signaux de repère d'origine rapportés au temps étant acheminés à un dispositif d'analyse électrique (17) et traités par celui-ci en calculant, à partir des signaux de repère d'origine, une vitesse de rotation et un angle de rotation attribué à chaque instant d'une rotation du rotor, et en reliant chaque angle de rotation attribué à un instant au signal de distance isochrone pour former un signal de distance dépendant de l'angle de rotation et en calculant à partir de là un élargissement du rotor (5) qui dépend de l'angle de rotation, et en calculant à partir de là un élargissement du rotor (5) dépendant de l'angle de rotation et de la vitesse de rotation, un deuxième capteur de distance étant disposé à une distance de base du rotor (5) en un point du rotor (5) éloigné du premier capteur de distance (14) dans le sens axial du rotor (5), point dont l'élargissement et la surface du rotor sont connus, lequel deuxième capteur de distance détecte dans le temps et sans contact la distance entre la surface du rotor et le deuxième capteur de distance et génère des deuxièmes signaux de distance électriques rapportés au temps lesquels sont acheminés au dispositif d'analyse électrique et traités par celui-ci pour corriger les premiers signaux de distance détectés par le premier capteur de distance (14) en éliminant, après avoir déduit l'élargissement et la forme connus de la surface de rotor du deuxième signal de distance, du premier signal de distance du premier capteur de distance les vibrations parasites restantes l'intérieur.

3. Procédé selon l'une des revendications précédentes, **caractérisé en ce que** les vibrations à une fréquence inférieure à une fréquence de premier ordre sont éliminées en mesurant les signaux de distance sur plusieurs rotations du rotor et en calculant ensuite une moyenne.

4. Procédé selon l'une des revendications précédentes, **caractérisé en ce qu'**une moyenne est calculée à partir de plusieurs courses de référence à faible vitesse de rotation pour déterminer la distance de base des capteurs de distance.

5. Procédé selon l'une des revendications précédentes, **caractérisé en ce que** des vibrations parasites de premier ordre sont éliminées en filtrant les signaux de distance.
